# EUROPÄISCHE PATENTSCHRIFT

(11) **EP 1 578 641 B1**
(45) Veröffentlichungstag und Bekanntmachung des Hinweises auf die Patenterteilung: **30.08.2006**
(21) Anmeldenummer: 03785524.4
(22) Anmeldetag: 17.11.2003
(51) Int. Cl.: B60P 1/44

(54) **NUTZFAHRZEUG, INSBESONDERE LASTKRAFTWAGEN MIT HUBLADEBÜHNE**
COMMERCIAL VEHICLE, ESPECIALLY A TRUCK WITH A LIFTING LOADING PLATFORM
VEHICULE UTILITAIRE, EN PARTICULIER CAMION EQUIPE D'UNE PLATE-FORME DE CHARGEMENT PAR LEVAGE

(30) Priorität: 20.11.2002 DE 10254035
(43) Veröffentlichungstag der Anmeldung: 28.09.2005
(73) Patentinhaber: Scharfenberger, Kurt, 66564 Ottweiler (DE)
(72) Erfinder: Scharfenberger, Kurt, 66564 Ottweiler (DE)
(74) Vertreter: Patentanwalts-Partnerschaft Rotermund + Pfusch + Bernhard
(86) Internationale Anmeldenummer: PCT/DE2003/003797
(87) Internationale Veröffentlichungsnummer: WO 2004/045903

(56) Entgegenhaltungen:
- EP-A- 0 773 136
- EP-A- 1 193 122
- CH-A- 456 454
- US-A- 4 010 571

## Beschreibung

Die Erfindung betrifft ein Nutzfahrzeug, insbesondere einen Lastkraftwagen mit oder ohne Anhänger oder Auflieger, mit den Merkmalen des Oberbegriffs des Anspruchs 1.

Aus der EP 0 773 136 A1 und aus der gattungsbildenden EP 1 193 122 A1 sind Lastkraftwagen bekannt, die an einem hinteren Fahrzeugende eine Hubladebühne aufweisen, die mit Hilfe einer an diesem hinteren Fahrzeugende angeordneten Bedieneinheit betätigbar ist. Die Hubladebühne ist dabei von einer das hintere Fahrzeugende mehr oder weniger verschließenden Schließstellung in eine Rampenstellung verstellbar, in welcher sich die Hubladebühne im wesentlichen horizontal erstreckt und in der die Hubladebühne eine Ladefläche des Fahrzeugs nach hinten verlängert. Ebenso ist die Hubladebühne zusätzlich oder alternativ in eine Bodenstellung verstellbar, in der sie im wesentlichen eben auf einem Bodenbereich hinter dem hinteren Fahrzeugende aufliegen. Hubladebühnen können dabei direkt am Heck eines Lastkraftwagens ausgebildet sein. Ebenso ist es möglich, eine derartige Hubladebühne an einem Anhänger oder an einem Auflieger eines Lastkraftwagens auszubilden.

Eine von einem solchen Lastkraftwagen anzufahrende Verladestation kann beispielsweise als Verladerampe ausgebildet sein, die einen der Hubladebühne zugewandten Endabschnitt aufweist, auf den die Hubladebühne in ihrer Rampenstellung auflegbar ist. Das Be- und Entladen des Fahrzeugs kann dann über die Rampe und die Hubladebühne besonders einfach durchgeführt werden.

Andere Verladestationen können beispielsweise durch eine ebenerdige Verladefläche gebildet sein, auf die die Hubladebühne abgesenkt werden muss.

Damit der Be- und Entladevorgang eines derartigen Fahrzeugs durchgeführt werden kann, muss der Lastkraftwagen in eine Verladestellung gebracht werden, in der die Hubladebühne - je nach Verladestation - in ihre Rampenstellung oder in ihre Bodenstellung verstellt werden kann. Zum Erreichen dieser Verladestellung muss das Fahrzeug rückwärts gegen die beispielsweise als Verladerampe ausgebildete Verladestation rangiert werden. Dieser Rangiervorgang erfordert vom Fahrzeugführer viel Erfahrung und Sorgfalt, da nur in einer vorbestimmten Relativstellung zwischen Fahrzeug und Rampe (Verladestellung) ein für die Be- und Entladung optimales Ablegen der Hubladebühne auf dem Endabschnitt der Verladerampe möglich ist. Das Fahrzeug muss zum Erreichen dieser vorbestimmten Verladestellung einen relativ eng begrenzten Abstand zwischen Verladerampe und hinterem Fahrzeugende einhalten, um die Hubladebühne ordnungsgemäß auf den Endabschnitt der Verladerampe auflegen zu können. Außerdem muss die Verladerampe relativ senkrecht angefahren werden, um ein schräges oder einseitiges Aufliegen der Hubladebühne auf dem Endabschnitt der Verladerampe zu vermeiden.

Um diese relativ eng begrenzte vorbestimmte Verladestellung auffinden zu können, muss der Fahrzeugführer, insbesondere bei einem Fahrzeug mit Anhänger oder Auflieger, nach einer Vorpositionierung des Fahrzeugs aussteigen, sich zum hinteren Fahrzeugende begeben und die momentane Positionierung des hinteren Fahrzeugendes begutachten. Anschließend muss der Fahrzeugführer wieder zur Fahrerkabine gehen, um die Positionierung des Fahrzeugs zu korrigieren. Danach muss der Fahrzeugführer wieder zur Verladerampe gehen, um erneut die Position zu prüfen. Sobald es dem Fahrzeugführer - oft nach mehrmaligem Korrigieren - gelungen ist, das Fahrzeug in der vorgesehenen Verladestellung zu positionieren, kann er mit Hilfe der am hinteren Fahrzeugende angebrachten Bedieneinheit die Hubladebühne auf die Verladerampe absenken. Im Hinblick darauf, dass die Arbeitszeit des Fahrzeugführers beim Transport von Gütern mittels eines Lastkraftwagens den größten Kostenfaktor bildet, besteht hier ein Bedarf, beim Be-und Entladen des Lastkraftwagens Zeit einzusparen.

Um das Rangieren eines Nutzfahrzeugs zu vereinfachen, ist es bekannt, am hinteren Fahrzeugende eine Rückblickkamera anzuordnen, die ein Bild eines hinter dem hinteren Fahrzeugende liegenden Überwachungsraums an einen Bildschirm sendet, der im Fahrerhaus des Fahrzeugs angeordnet ist. Mit Hilfe einer derartigen Rückblickkamera kann der Fahrzeugführer direkt den Raum hinter dem hinteren Fahrzeugende einsehen, wodurch sich das Rückwärtsfahren vereinfacht. Da eine derartige Rückblickkamera zwangsläufig mit einem Weitwinkelobjektiv versehen sein muss, um den Überwachungsraum hinter dem hinteren Fahrzeugende erfassen zu können, und da mittels einer Kamera und eines Bildschirms üblicherweise nur zweidimensionale Bilder erzeugt werden können, kann der Fahrzeugführer nur sehr schwer Abstände zwischen dem hinteren Fahrzeugende und einem Hindernis abschätzen, dem sich das Fahrzeug beim Rückwärtsfahren nähert. Dementsprechend kann eine derartige Rückblickkamera zwar die erste Annäherung des Fahrzeugs an eine Verladestation erleichtern, zwingt den Fahrzeugführer jedoch nach wie vor dazu, zum Auffinden der gewünschten Verladestellung, das Fahrzeug zu verlassen, um die aktuelle Relativlage zwischen hinterem Fahrzeugende und Verladerampe vor Ort zu begutachten.

Die vorliegende Erfindung beschäftigt sich mit dem Problem, für ein Nutzfahrzeug der eingangs genannten Art eine Möglichkeit aufzuzeigen, das Be- und Entladen zu vereinfachen.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, im oder am Bildschirm eine Markierung anzubringen, die das Auffinden der gewünschten Verladestellung vereinfacht, indem der Fahrzeugführer sein Fahrzeug so rangiert, bis die Markierung mit einer charakteristischen Ecke oder Kante der jeweiligen Verladestation im Bildschirm übereinstimmt. Sobald dies der Fall ist, kann der Fahrzeugführer davon ausgehen, dass die optimale Verladestellung erreicht ist, so dass ohne weiteren Rangiervorgang oder Korrekturvorgang die Hubladebühne abgesenkt werden kann. Da der Fahrzeugführer somit zum Auffinden der vorgesehenen optimalen Verladestellung das Fahrzeug nicht mehr verlassen muß, ergibt sich durch die Erfindung ein extremer Zeitvorteil gegenüber herkömmlichen Nutzfahrzeugen.

Von besonderem Vorteil ist bei der Erfindung; dass die Bedieneinheit der Hubladebühne im .Fahrerhaus angeordnet ist. Durch diese Maßnahme kann ein weiterer deutlicher Zeitgewinn realisiert werden, da der Fahrzeugführer nun auch zum Bedienen der Hubladebühne das Fahrerhaus nicht mehr verlassen muss. Da der Schwenkbereich der Hubladebühne vollständig innerhalb des von der Rückblickkamera erfassten überwachungsraums liegt, ergeben sich durch diese Fernbedienung der Hubladebühne keine Sicherheitsbedenken, da der Fahrzeugführer über seinen Bildschirm überwachen kann, ob sich im Schwenkbereich der Hubladebühne eine Person oder ein anderes Hindernis befindet.

Durch die vorgeschlagene Ausstattung der Bedieneinheit mit wenigstens vier Schaltern zur Betätigung verschiedener Funktionen der Hubladebühne besitzt die Bedieneinheit außerdem einen besonders preiswerten Aufbau.

Bei einer als Verladerampe ausgebildeten Verladestation kann die charakteristische Kante beispielsweise durch eine der Hubladebühne zugewandte obere Vorderkante der Verladerampe gebildet sein. Die einer solchen Verladerampe zugeordnete Markierung ist dann am oder im Bildschirm so positioniert, dass sich diese Vorderkante im Bildschirm dann mit der zugehörigen Markierung deckt, wenn das Nutzfahrzeug die dieser Markierung zugeordnete Verladestellung erreicht, in der die Hubladebühne zum Be- und Entladen sicher auf einem die Vorderkante aufweisenden Endabschnitt der Verladerampe auflegbar ist.

Zusätzlich oder alternativ zu einer Markierung, die einer Verladerampe zugeordnet ist, kann im oder am Bildschirm eine Markierung angebracht sein,' die einer als ebenerdige Verladefläche ausgebildeten Verladestation zugeordnet ist. Bei einer derartigen Verladestation kann die charakteristische Ecke oder Kante zweckmäßig durch einen unteren Rand einer der Hubladebühne zugewandten, nach oben vom Boden abstehenden Begrenzung der Verladefläche gebildet sein. Eine derartige Begrenzung kann beispielsweise durch eine Treppenstufe oder durch eine Hauswand gebildet sein. Die Verladestellung ist dann so gewählt, dass die Hubladebühne zum Be- und Entladen sicher vor dieser Begrenzung auf die Verladefläche auflegbar ist.

Die am Bildschirm angebrachte Markierung bzw. die daran angebrachten Markierungen können fest oder einstellbar an einem Bildschirmgehäuse angebracht sein. Ebenso ist es möglich, eine oder mehrere Markierungen in das am Bildschirm dargestellte Bild fest oder einstellbar zu integrieren, wodurch die jeweilige Markierung zu einem Bildbestandteil wird.

Entsprechend einer anderen Ausführungsform kann eine Steuereinheit vorgesehen sein, in der für mehrere verschiedene Verladestationen jeweils eine zugehörige Markierung gespeichert oder speicherbar ist, wobei eine gespeicherte Markierung durch Eingabe der gewünschten Verladestation abrufbar und am Bildschirm darstellbar ist. Mit Hilfe dieser Weiterbildung ist es möglich, für grundsätzlich beliebig viele verschiedene Verladestationen die zugehörigen Markierungen abzuspeichern und bei Bedarf am Bildschirm darzustellen. Auf diese Weise kann grundsätzlich jede vom Fahrzeug anzufahrende Verladestation mit einer entsprechenden Markierung versehen werden. Verladestationen, insbesondere Verladerampen, können sich beispielsweise durch unterschiedliche Rampenhöhen voneinander unterscheiden, die dementsprechend unterschiedliche Verladestellungen für das Fahrzeug erfordern. Durch die Zuordnung individueller Markierungen kann insbesondere bei Fahrzeugen die regelmäßig gleiche Touren zurücklegen, das Auffinden der unterschiedlichen Verladestellungen erheblich vereinfacht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine Seitenansicht auf ein als Lastkraftwagen ohne Anhänger ausgebildetes Nutzfahrzeug bei einer als Verladerampe ausgebildeten Verladestation,
- Fig. 2: eine Ansicht wie in Fig. 1, jedoch bei einer als Verladefläche ausgebildeten Verladestation,
- Fig. 3: eine Ansicht auf einen Bildschirm mit daran angebrachter Markierung bei einer ersten Ausführungsform,
- Fig. 4: eine Ansicht wie in Fig. 3, jedoch bei einer zweiten Ausführungsform,
- Fig. 5: eine Ansicht wie in Fig. 1, jedoch bei einem als Lastkraftwagen mit Auflieger ausgebildeten Nutzfahrzeug, und
- Fig. 6: eine Ansicht wie in Fig. 1, jedoch bei einem als Lastkraftwagen mit Anhänger ausgebildeten Nutzfahrzeug,
- Fig. 7: eine Ansicht wie in Fig. 3, jedoch bei einer anderen Ausführungsform,
- Fig. 8: eine Seitenansicht auf einen Heckbereich eines Nutzfahrzeuges beim Aufschwenken bzw. beim Zuschwenken einer Hubladebühne,
- Fig. 9: eine Ansicht wie in Fig. 8, jedoch beim Absenken bzw. beim Anheben der Hubladebühne.

Bei den vorliegenden Figuren beziehen sich gleiche Referenzzeichen auf gleiche oder funktional gleiche oder ähnliche Merkmale.

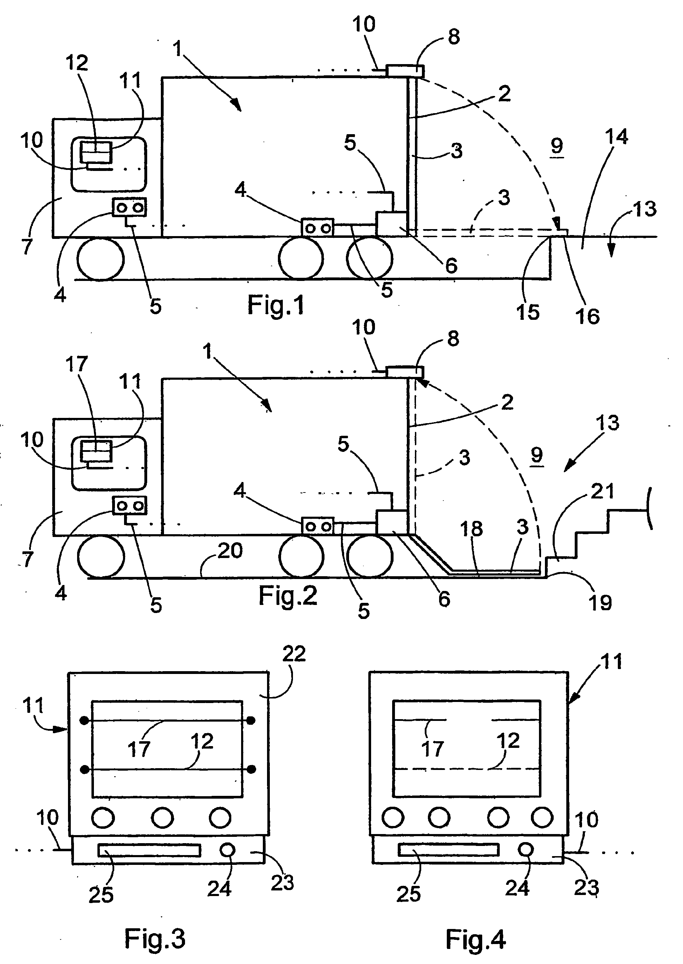

Entsprechend Fig. 1 weist ein erfindungsgemäßes Nutzfahrzeug 1, das bei der Ausführungsform gemäß Fig. 1 als Lastkraftwagen ohne Anhänger ausgebildet ist, an seinem hinteren Fahrzeugende 2 eine Hubladebühne 3 auf, die zumindest zwischen einer in Fig. 1 mit durchgezogenen Linien dargestellten Schließstellung und einer in Fig. 1 mit unterbrochenen Linien dargestellten Rampenstellung verstellbar ist. Zum Betätigen der Hubladebühne 3 ist wenigstens eine Bedieneinheit 4 vorgesehen, die über entsprechende Leitungen 5 mit einer Antriebseinheit 6 der Hubladebühne 3 verbunden ist. Erfindungsgemäß ist die Bedieneinheit 4 in einem Fahrerhaus 7 des Fahrzeugs 1 untergebracht, derart, dass ein Fahrzeugführer im Fahrerhaus 7 verbleiben kann, um die Hubladebühne 3 zu bedienen. Ebenso ist eine Ausführungsform möglich, bei der sowohl im Fahrerhaus 7 als auch nahe der Hubladebühne 3 im Bereich des hinteren Fahrzeugendes 2 jeweils eine solche Bedieneinheit 4 angeordnet ist, so dass die Hubladebühne 3 sowohl aus dem Fahrerhaus 7 als auch direkt an der Hubladebühne 3 betätigbar ist.

Das erfindungsgemäße Nutzfahrzeug 1 ist außerdem mit einer Rückblickkamera 8 ausgestattet, die ein Bild eines Überwachungsraums 9 erfasst, der hinter dem hinteren Fahrzeugende 2 liegt. Die Rückblickkamera 8 sendet über entsprechende Leitungen 10 die Bildsignale an einen Bildschirm 11, der im Fahrerhaus 7 angeordnet ist. An diesem Bildschirm 11 kann nun das von der Rückblickkamera 8 erfasste Bild so dargestellt werden, dass der Fahrzeugführer im Fahrerhaus 7 den Überwachungsraum 9 kontrollieren kann.

Erfindungsgemäß ist im oder am Bildschirm 11 wenigstens eine Markierung 12 angebracht, die hier in Form einer horizontalen Linie dargestellt ist. Diese Markierung 12 ist einer vorbestimmten Verladestation 13 bzw. einem bestimmten Verladestation-Typ zugeordnet. Im Fall der Fig. 1 ist diese Verladestation 13 durch eine Verladerampe 14 gebildet. Der Markierung 12 ist nun eine der Hubladebühne 3 zugewandte, vorbestimmte charakteristische Ecke oder Kante zugeordnet, die bei der Verladerampe 14 der Fig. 1 durch eine obere Vorderkante 15 gebildet ist. Die Markierung 12 ist entsprechend der Erfindung im oder am Bildschirm 11 so positioniert, dass das Nutzfahrzeug 1 bei einer Überdeckung dieser Vorderkante 15 mit der Markierung 12 im Bildschirm 11 eine dieser Verladestation 13 zugeordnete, vorbestimmte Verladestellung aufweist, in der sich die Hubladebühne 3 für einen optimalen Be- und Entladevorgang öffnen bzw. auf die Verladerampe 14 absenken lässt.

Die vorliegende Erfindung arbeitet wie folgt:

Wenn das Fahrzeug 1 zum Be- oder Entladen in seine für den Be- und Entladevorgang optimale Verladestellung relativ zur Verladerampe 14 gebracht werden soll, rangiert der Fahrzeugführer das Fahrzeug 1 so, dass sich das Fahrzeug 1 mit seinem hinteren Fahrzeugende 2 langsam der Verladerampe 14 nähert. Sobald die Verladerampe 14 in den Überwachungsraum 9 der Rückblickkamera 8 gelangt, kann der Fahrzeugführer am Bildschirm 11 das Erreichen der vorbestimmten Verladestellung kontrollieren. Er kann dann das Fahrzeug 1 über das Bild im Monitor 11 so lange rangieren, bis sich die Vorderkante 15 der Verladerampe 14 mit der Markierung 12 im Bildschirm 11 überdeckt. Gleichzeitig kann der Fahrer die senkrechte Ausrichtung des Fahrzeugs 1 relativ zur Vorderkante 15 kontrollieren. Nur wenn sich das Fahrzeug 1 senkrecht der Vorderkante 15 nähert, verlaufen die als horizontale Linie ausgebildete Markierung 12 und die im Bildschirm 11 dargestellte Vorderkante 15 parallel zueinander.

Sobald im Bildschirm 11 die Überdeckung von Vorderkante 15 und Markierung 12 vorliegt, ist die gewünschte Verladestellung für das Fahrzeug 1 relativ zur Verladerampe 14 erreicht. Der Fahrzeugführer kann dann zweckmäßig mit der im Fahrerhaus 7 angeordneten Bedieneinheit 4 die Hubladebühne 3 absenken, wobei diese auf einem die Vorderkante 15 aufweisenden Endabschnitt 16 der Verladerampe 14 sicher, also mit hinreichender Überlappung, zur Auflage kommt. Auch dieser Auflegevorgang ist am Bildschirm 11 kontrollierbar.

Entsprechend Fig. 2 kann im Bildschirm 11 auch eine Markierung 17 angebracht sein, die einer anderen Verladestation 13, hier einer ebenerdigen Verladefläche 18, zugeordnet ist. Die für eine derartige Verladefläche 18 charakteristische Ecke oder Kante wird hierbei durch einen unteren Rand 19 einer der Hubladebühne 3 zugewandten, nach oben vom Boden 20 der Verladefläche 18 abstehenden Begrenzung 21 gebildet. Diese Begrenzung 21 der Verladefläche 18 ist in Fig. 2 durch die unterste Stufe einer Treppe gebildet. Die dieser Verladefläche 18 zugeordnete Markierung 17 ist dabei im oder am Bildschirm 11 so positioniert, dass in der zugehörigen Verladestellung des Fahrzeugs 1 die Hubladebühne 3 sicher vor dieser Begrenzung 21 auf der Verladefläche 18 auflegbar ist. In Fig. 2 ist die Hubladebühne 3 zu diesem Zweck in eine Bodenstellung verstellbar, in der sie am Boden 20 bzw. auf der ebenerdigen Verladefläche 18 zur Auflage kommt. Mit Hilfe der Markierung 17 wird hierbei gewährleistet, dass beim Absenken der Hubladebühne 3 in deren Bodenstellung gemäß Fig. 2 keine Kollision zwischen Hubladebühne 3 und Begrenzung 21 auftritt.

Entsprechend den Fig. 3 und 4 können am oder im Bildschirm 11 mehrere, insbesondere auch mehr als zwei, verschiedene Markierungen 12 und 17 vorgesehen sein.

Bei der Ausführungsform gemäß Fig. 3 sind die Markierungen 12 und 17 an einem Bildschirmgehäuse 22 angebracht. Dabei können die Markierungen fest am Bildschirmgehäuse 22 angebracht sein. Ebenso ist es möglich, die jeweilige Markierung 12 oder 17 einstellbar am Bildschirmgehäuse 22 anzubringen. Beispielsweise kann dadurch individuell eine Anpassung an eine bestimmte Verladestation 13 durchgeführt werden.

Anstelle einer Anbringung der Markierungen 12 und 17 am Bildschirmgehäuse 22 können diese z.B. auch auf der Bildschirmfläche angebracht, insbesondere aufgeklebt oder aufgemalt, sein.

-Bei der Ausführungsform gemäß Fig. 4 sind die Markierungen 12 und 17 in das am Bildschirm 11 dargestellte Bild integriert. Das bedeutet, dass die Markierungen 12 und 17 einen Bestandteil des am Bildschirm 11 dargestellten Bildes bilden. Bei dieser Ausführungsform kann besonders einfach eine Einstellbarkeit oder Verstellbarkeit der jeweiligen Markierung 12 oder 17 realisiert werden. Auch hierdurch kann eine Feinjustierung der jeweiligen Markierung 12 oder 17 zur Anpassung des Fahrzeugs 1 an eine bestimmte Verladestation 13 durchgeführt werden.

Während die Markierungen 12 und 17 bei der Ausführungsform gemäß Fig. 3 durch durchgehende horizontale Linien oder Balken gebildet sind, sind die linienförmigen Markierungen 12 und 17 bei der Ausführungsform gemäß Fig. 4 durch unterbrochene Linien wiedergegeben wodurch gewährleistet ist, dass in den Unterbrechungen der Markierungen 12, 17 die für die jeweilige Verladestation 13 charakteristische Kante 15 bzw. 19 am Bildschirm 11 besonders gut erkennbar ist.

Entsprechend den Fig. 3 und 4 kann bei der Erfindung außerdem eine Steuereinheit 23 vorgesehen sein, mit deren Hilfe für mehrere verschiedene Verladestationen 13 jeweils eine zugehörige Markierung 12, 17 gespeichert werden kann. Beispielsweise kann in einem Speichermodus der Steuereinheit 23 eine bestimmte Verladestation 13 in herkömmlicher Weise, z.B. mit einem Einweiser, angefahren werden. Sobald die gewünschte Verladestellung erreicht ist, kann dann eine entsprechende Markierung im Bildschirm 11 eingestellt und zugeordnet werden, die dann in entsprechenden Speichermitteln der Steuereinheit 23 gespeichert wird. Bei der nächsten Annäherung an die so gespeicherte Verladestation kann die zugehörige Markierung durch Eingabe der jeweiligen Verladestation 13 abgerufen und am Bildschirm 11 dargestellt werden. Beispielsweise kann mit Hilfe eines Einstellglieds 24 und einer Anzeigeeinrichtung 25 die gewünschte Verladestation 13 ausgewählt werden, deren zugehörige Markierung 12, 17 dann im Bildschirm 11 dargestellt wird, um den Anfahrvorgang zum Auffinden der Verladestellung durchzuführen.

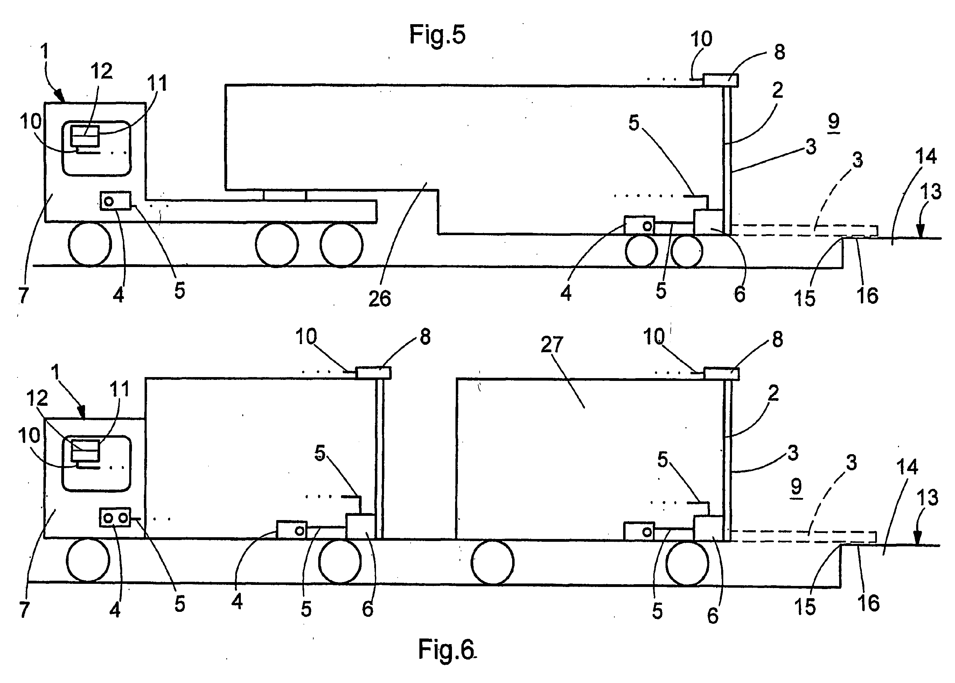

Entsprechend Fig. 5 kann das erfindungsgemäße Nutzfahrzeug 1 auch als Lastkraftwagen mit einem Auflieger 26 ausgebildet sein.

In entsprechender Weise kann das Nutzfahrzeug 1 gemäß Fig. 6 auch durch einen Lastkraftwagen mit Anhänger 27 gebildet sein. Dabei ist es grundsätzlich möglich, dass sowohl der Anhänger 27 als auch das Zugfahrzeug mit einer Hubladebühne 3 ausgestattet ist. Es ist klar, dass bei einer derartigen Ausführungsform die im Fahrerhaus 7 angeordnete Bedieneinheit 4 automatisch oder manuell zum Betätigen der der Zugmaschine zugeordneten Hubladebühne 3 und der dem Anhänger 27 zugeordneten Hubladebühne 3 umschaltbar ist. Sofern sowohl der Anhänger 27 als auch die. Zugmaschine mit einer Rückblickkamera 8 ausgestattet sind, sind auch hier Maßnahmen getroffen, die ein willkürliches oder automatisches Umschalten zwischen den beiden Kameras 8 ermöglichen.

Entsprechend den Fig. 1, 5 und 6 ist die Verladerampe 14 zweckmäßig so dimensioniert, dass die Hubladebühne 3 in ihrer Rampenstellung im wesentlichen horizontal verläuft, wenn sie auf dem Endabschnitt 16 der Verladerampe 14 aufliegt.

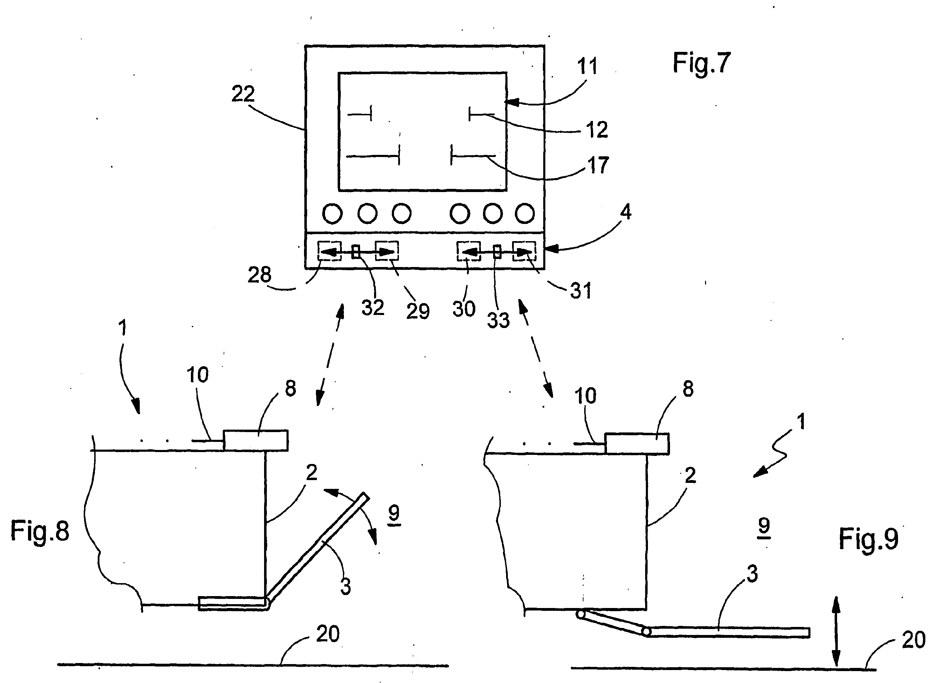

Entsprechend Fig. 7 besitzt die erfindungsgemäße Bedieneinheit 4 wenigstens vier Schalter, nämlich einen ersten Schalter 28, einen zweiten Schalter 29, einen dritten Schalter 30 und einen vierten Schalter 31. Die Schalter 28 bis 31 sind dabei im Inneren der Bedieneinheit 4 untergebracht und dementsprechend nur mit unterbrochenen Linien dargestellt. Die Schalter 28 bis 31 dienen zur Betätigung unterschiedlicher Funktionen der Hubladebühne 3. Der erste Schalter 28 dient zum Aufschwenken der Hubladebühne 3, d.h., eine Betätigung des ersten Schalters 28 veranlasst das Aufschwenken der Hubladebühne 3. Im Unterschied dazu wird durch eine Betätigung des zweiten Schalters 29 ein Zuschwenken der Hubladebühne 3 herbeigeführt. Dem ersten Schalter 28 und dem zweiten Schalter 29 ist eine gemeinsame erste Handhabe 32 zugeordnet, mit der der Fahrzeugführer wahlweise bzw. wechselweise den ersten Schalter 28 oder den zweiten Schalter 29 betätigen kann. Beispielsweise ist die erste Handhabe 32 als schwenkbarer Hebel ausgestaltet.

Mit Hilfe des dritten Schalters 30 kann die Hubladebühne 3 in ihrer aufgeschwenkten Offenstellung abgesenkt werden. Im Unterschied dazu bewirkt eine Betätigung des vierten Schalters 31 ein Anheben der aufgeschwenkten Hubladebühne 3. auch Für dieses Schalterpaar 30, 31 ist eine gemeinsame zweite Handhabe 33 vorgesehen, die es ermöglicht, wahlweise oder wechselweise den dritten Schalter 30 oder den vierten Schalter 31 manuell zu betätigen. Auch die zweite Handhabe 32 ist zweckmäßig als schwenkbarer Hebel ausgestaltet.

Die Betätigungsrichtungen der beiden Handhaben 32, 33 sind in Fig. 7 durch entsprechende Pfeile symbolisiert. Mittels eines unterbrochenen Doppelpfeils zwischen den Fig. 7 und 8 wird die funktionale Zuordnung der ersten Handhabe 32 bzw. des ersten Schalters 28 und des zweiten Schalters 29 zum Aufschwenken bzw. Zuschwenken der Hubladebühne gemäß Fig. 8 verdeutlicht, in der die Schwenkbewegungen ebenfalls durch Pfeile angedeutet sind. In entsprechender Weise wird auch der funktionale Zusammenhang der zweiten Handhabe 33 bzw. des dritten Schalters 30 und des vierten Schalters 31 zum Anheben bzw. Absenken der Hubladebühne 3 gemäß Fig. 9 durch einen unterbrochenen Doppelpfeil zwischen den Fig. 7 und 9 hergestellt, wobei in Fig. 9 die Hubbewegungen durch einen Doppelpfeil symbolisiert sind.

Bei der Ausführungsform gemäß Fig. 7 ist die Bedieneinheit 4 zusammen mit dem Bildschirm 11 in einem gemeinsamen Gehäuse 22 untergebracht. Das bedeutet, dass der Bildschirm 11 zusammen mit der Bedieneinheit 4 eine integrale Einheit bilden.

Bei einer anderen vorteilhaften Ausführungsform kann die Bedieneinheit 4 in ein. Innenraumverkleidungselement des Fahrerhauses 7 integriert oder eingebaut sein. Als Innenraumverkleidungselement zur Aufnahme der Bedieneinheit 4 eignet sich beispielsweise ein Armaturenbrett, eine Mittelkonsole oder ein Fahrzeughimmel. Alternativ kann die Bedieneinheit 4 auch als separate Komponente, insbesondere nachträglich, im Fahrerhaus 7 an einer geeigneten Stelle montiert werden.

## Patentansprüche

1. Nutzfahrzeug, insbesondere Lastkraftwagen mit oder ohne Anhänger (27) oder Auflieger (26), mit einer am hinteren Fahrzeugende (2) angeordneten Hubladebühne (3), die mit einer Bedieneinheit (4) betätigbar ist,
**dadurch gekennzeichnet,**
- **dass** am hinteren Fahrzeugende (2) eine Rückblickkamera (8) angeordnet ist, die ein Bild eines hinter dem hinteren Fahrzeugende (2) liegenden Überwachungsraums (9) an einen Bildschirm (11) sendet, der in einem Fahrerhaus (7) des Fahrzeugs (1) angeordnet ist,
- **dass** im oder am Bildschirm (11) wenigstens eine Markierung (12, 17) angebracht ist, die so positioniert ist, dass das Nutzfahrzeug (1) beim Anfahren einer der Markierung (12, 17) zugeordneten Verladestation. (13) eine vorbestimmte Verladestellung aufweist, wenn im Bildschirm (11) zwischen der Markierung (12, 17) und einer vorbestimmten, der Hubladebühne (3) zugewandten Ecke oder Kante (15, 19) der Verladestation (13) eine Überdeckung erreicht ist,
- **dass** die Bedieneinheit (4) der Hubladebühne (3) im Fahrerhaus (7) angeordnet ist,
- **dass** die Bedieneinheit (4) einen ersten Schalter (28) aufweist, der bei seiner Betätigung ein Aufschwenken der Hubladebühne (3) veranlasst,
- **dass** die Bedieneinheit (4) einen zweiten Schalter (29) aufweist, der bei seiner Betätigung ein Zuschwenken der Hubladebühne (3) veranlasst,
- **dass** die Bedieneinheit (4) einen dritten Schalter (30) aufweist, der bei seiner Betätigung ein Absenken der aufgeschwenkten Hubladebühne (3) veranlasst,
- **dass** die Bedieneinheit (4) einen vierten Schalter (31) aufweist, der bei seiner Betätigung ein Anheben der aufgeschwenkten Hubladebühne (3) veranlasst.

2. Nutzfahrzeug nach Anspruch 1,
**dadurch gekennzeichnet,**
**dass** der erste Schalter (28) und der zweite Schalter (29) mittels einer gemeinsamen ersten Handhabe (32) wechselweise betätigbar sind.

3. Nutzfahrzeug nach Anspruch 1 oder 2,
**dadurch gekennzeichnet,**
**dass** der dritte Schalter (30) und der vierte Schalter (31) mittels einer gemeinsamen zweiten Handhabe (33) wechselweise betätigbar sind.

4. Nutzfahrzeug nach einem der Ansprüche 1 bis 3,
**dadurch gekennzeichnet,**
**dass** die Bedieneinheit (4) in ein Innenraumverkleidungselement, z.B. Armaturenbrett, Mittelkonsole oder Fahrzeughimmel, integriert oder eingebaut ist.

5. Nutzfahrzeug nach einem der Ansprüche 1 bis 4,
**dadurch gekennzeichnet,**
**dass** die Bedieneinheit (4) und der Bildschirm (11) in einem gemeinsamen Gehäuse (22) untergebracht sind.

6. Nutzfahrzeug nach einem der Ansprüche 1 bis 5,
**dadurch gekennzeichnet,**
**dass** zwei Bedieneinheiten (4) für die.Betätigung der Hubladebühne (3) vorgesehen sind, wobei die eine am hinteren Fahrzeugende (2) bei der Hubladebühne (3) und die andere im Fahrerhaus (7) angeordnet ist.

7. Nutzfahrzeug nach einem der Ansprüche 1 bis 6,
**dadurch gekennzeichnet,**
**dass** eine Markierung (12) für eine als Verladerampe (14) ausgebildete Verladestation (13) vorgesehen ist, wobei die Kante durch eine der Hubladebühne (3) zugewandte obere Vorderkante (15) der Verladerampe (14) gebildet ist, wobei die zugehörige Verladestellung so gewählt ist, dass die Hubladebühne (3) zum Be- und Entladen sicher auf einen die Vorderkante (15) aufweisenden Endabschnitt (16) der Verladerampe (14) auflegbar ist.

8. Nutzfahrzeug nach Anspruch 7,
**dadurch gekennzeichnet,**
**dass** die Verladerampe (14) und/oder die Hubladebühne (3) so dimensioniert ist, dass die Hubladebühne (3) im wesentlichen horizontal verläuft, wenn sie auf dem Endabschnitt (16) der Verladerampe (14) aufliegt.

9. Nutzfahrzeug nach einem der Ansprüche 1 bis 8,
**dadurch gekennzeichnet,**
**dass** eine Markierung (17) für eine als ebenerdige Verladefläche (18) ausgebildete Verladestation (13) vorgesehen ist, wobei die Ecke oder Kante durch einen unteren Rand (19) einer der Hubladebühne (3) zugewandten, nach oben vom Boden (20) abstehende Begrenzung (21) der Verladefläche (18) gebildet ist, wobei die zugehörige Verladestellung so gewählt ist, dass die Hubladebühne (3) zum Be- und Entladen sicher vor der Begrenzung (21) auf die Verladefläche (18) auflegbar ist.

10. Nutzfahrzeug nach einem der Ansprüche 1 bis 9,
**dadurch gekennzeichnet,**
**dass** wenigstens eine Markierung (12, 17) an einem Bildschirmgehäuse (22) fest oder einstellbar angebracht ist.

11. Nutzfahrzeug nach einem der Ansprüche 1 bis 10,
**dadurch gekennzeichnet,**
**dass** wenigstens eine Markierung (12, 17) in das am Bildschirm (11) dargestellte Bild fest oder einstellbar integriert ist.

12. Nutzfahrzeug nach einem der Ansprüche 1 bis 11,
**dadurch gekennzeichnet,**
**dass** eine Steuereinheit (23) vorgesehen ist, in der für mehrere verschiedene Verladestationen (13) jeweils eine zugehörige Markierung (12, 17) gespeichert oder speicherbar ist, wobei eine gespeicherte Markierung (12, 17) durch Eingabe der gewünschten Verladestation (13) abrufbar und am Bildschirm (11) darstellbar ist.

13. Bedieneinheit zur Betätigung einer Hubladebühne (3) eines Nutzfahrzeuges (1), insbesondere Lastkraftwagen mit oder ohne Anhänger (27) oder Auflieger (26), wobei beim Nutzfahrzeug (1) die mit der Bedieneinheit (4) betätigbare Hubladebühne (3) an einem hinteren Fahrzeugende (2) angeordnet ist, an dem eine Rückblickkamera (8) angeordnet ist, die ein Bild eines hinter dem hinteren Fahrzeugendes (2) liegenden Überwachungsraums (9) an einen in einem Fahrerhaus (7) des Fahrzeugs (1) angeordneten Bildschirm (11) sendet, in oder an dem wenigstens eine Markierung (12, 17) angebracht ist, die so positioniert ist, dass das Nutzfahrzeug (1) beim Anfahren einer der Markierung (12, 17) zugeordneten Verladestation (13) eine vorbestimmte Verladestellung aufweist, wenn im Bildschirm (11) zwischen der Markierung (12, 17) und einer vorbestimmten, der Hubladebühne (3) zugewandten Ecke oder Kante (15, 19) der Verladestation (13) eine Überdeckung erreicht ist,
**dadurch gekennzeichnet,**
- **dass** die Bedieneinheit (4) zum Einbau in das Fahrerhaus (7) des Nutzfahrzeugs (1) ausgebildet ist,
- **dass** die Bedieneinheit (4) einen ersten Schalter (28) aufweist, der bei seiner Betätigung ein Aufschwenken der Hubladebühne. (3) veranlasst,
- **dass** die Bedieneinheit (4) einen zweiten Schalter (29) aufweist, der bei seiner Betätigung ein Zuschwenken der Hubladebühne (3) veranlasst,
- **dass** die Bedieneinheit (4) einen dritten Schalter (30) aufweist, der bei seiner Betätigung ein Absenken der aufgeschwenkten Hubladebühne (3) veranlasst,
- **dass** die Bedieneinheit (4) einen vierten Schalter (31) aufweist, der bei seiner Betätigung ein Anheben der aufgeschwenkten Hubladebühne (3) veranlasst.

14. Bedieneinheit nach Anspruch 13,
**gekennzeichnet**
**durch** die kennzeichnenden Merkmale wenigstens eines der Ansprüche 2 bis 5.

## Claims

1. A commercial vehicle, in particular a truck with or without a trailer (27) or semi-trailer (26), with a lifting loading platform (3) arranged on the rear end (2) of the vehicle, operable with an operating unit (4),
**characterized in that**
- a rearview camera (8) which is mounted on the rear end (2) of the vehicle and sends an image of a monitoring space (9) situated behind the rear end (2) of the vehicle to a display screen (11) which is set up in a driver's cab (7) of the vehicle (1),
- at least one mark (12, 17) is provided in or on the display screen (11), this mark being positioned in such a way that the commercial vehicle (1) has a predetermined loading position in the approach to a loading station (13) assigned to the mark (12, 17) when a correspondence is achieved on the display screen (11) between the mark (12, 17) and a predetermined corner or edge (15, 19) of the loading station (13) facing the lifting loading platform (3),
- the operating unit (4) of the lifting loading platform (3) is arranged in the driver's cab (7),
- the operating unit (4) has a first switch (28) which causes the lifting loading platform (3) to be pivoted upward when the switch is operated,
- the operating unit (4) has a second switch (29) which causes the lifting loading platform (3) to be pivoted upward into a closed position when the switch is operated,
- the operating unit (4) has a third switch (30) which causes the lifting loading platform (3) that has been pivoted upward to be lowered when the switch is operated,
- the operating unit (4) has a fourth switch (31) which causes the lifting loading platform (3) that has been pivoted upward to be raised when the switch is operated.

2. The commercial vehicle according to Claim 1,
**characterized in that**
the first switch (28) and the second switch (29) can be operated in alternation by means of a shared first handle (32).

3. The commercial vehicle according to Claim 1 or 2,
**characterized in that**
the third switch (30) and the fourth switch (31) can be operated in alternation by means of a shared second handle (33).

4. The commercial vehicle according to any one of Claims 1 through 3,
**characterized in that**
the operating unit (4) is integrated into or installed in an interior paneling element, e.g., a dashboard, a central console or a headliner.

5. The commercial vehicle according to any one of Claims 1 through 4, **characterized in that** the operating unit (4) and the display screen (11) are accommodated in a shared housing (22).

6. The commercial vehicle according to any one of Claims 1 through 5,
**characterized in that**
two operating units (4) are provided for operating the lifting loading platform (3), whereby one operating unit is arranged on the rear end (2) of the vehicle with the lifting loading platform (3) and the other operating unit is provided in the driver's cab (7).

7. The commercial vehicle according to any one of Claims 1 through 6,
**characterized in that**
a mark (12) is provided for a loading station (13) which is designed as a loading ramp (14), whereby the edge is formed by an upper front edge (15) of the loading ramp (14) facing the lifting loading platform (3), whereby the respective loading position is selected so that the lifting loading platform (3) can be reliably placed on an end section (16) of the loading ramp (14) having the front edge (15).

8. The commercial vehicle according to Claim 7,
**characterized in that**
the loading ramp (14) and/or the lifting loading platform (3) are designed with dimensions such that the lifting loading platform (3) runs essentially horizontally when it comes to rest on the end section (16) of the loading ramp (14) .

9. The commercial vehicle according to any one of Claims 1 through 8,
**characterized in that**
a mark (17) is provided for a loading station (13) which is designed as a ground-level loading area (18), whereby the corner or edge is formed by a lower edge (19) of a border (21) of the loading area (18) which protrudes upward from the ground (20) and faces the lifting loading platform (3), whereby the respective loading position is selected so that the lifting loading platform (3) can be placed reliably on the loading surface (18) in front of the border (21) for loading and unloading.

10. The commercial vehicle according to any one of Claims 1 through 9,
**characterized in that**
at least one mark (12, 17) is provided permanently or adjustably on a display screen housing (22).

11. The commercial vehicle according to any one of Claims 1 through 10,
**characterized in that**
at least one mark (12, 17) is permanently or adjustably integrated into the image displayed on the display screen (11).

12. The commercial vehicle according to any one of Claims 1 through 11,
**characterized in that**
a control unit (23) is provided in which a respective mark (12, 17) is stored or can be stored for multiple different loading stations (13), whereby a stored mark (12, 17) can be located by input of the desired loading station (13) and can be displayed on the display screen (11).

13. An operating unit for operation of a lifting loading platform (3) of a commercial vehicle (1), in particular a truck with or without a trailer (27) or semi-trailer (26), with a lifting loading platform (3) arranged on the rear end (2) of the vehicle, operable with an operating unit (4) in the commercial vehicle (1), a rearview camera (8) being mounted thereon, sending an image of a monitoring space (9) situated behind the rear end (2) of the vehicle to a display screen (11) which is set up in a driver's cab (7) of the vehicle (1), at least one mark (12, 17) being provided therein or thereon, this mark being positioned such that the commercial vehicle (1) has a predetermined loading position in the approach to a loading station (13) assigned to the mark (12, 17), when a correspondence is achieved on the display screen (11) between the mark (12, 17) and a predetermined corner or edge (15, 19) of the loading station (13) facing the lifting loading platform (3),
**characterized in that**
- the operating unit (4) of the lifting loading platform (3) is designed for installation in the driver's cab (7) of the commercial vehicle (1),
- the operating unit (4) has a first switch (28) which causes the lifting loading platform (3) to be pivoted upward when the switch is operated,
- the operating unit (4) has a second switch (29) which causes the lifting loading platform (3) to be pivoted upward into a closed position when the switch is operated,
- the operating unit (4) has a third switch (30) which causes the lifting loading platform (3) that has been pivoted upward to be lowered when the switch is operated,
- the operating unit (4) has a fourth switch (31) which causes the lifting loading platform (3) that has been pivoted upward to be raised when the switch is operated.

14. The operating unit according to Claim 13,
**characterized by**
the characterizing features of at least one of Claims 2 through 5.

## Revendications

1. Véhicule utilitaire, en particulier poids lourd avec ou sans remorque (27) ou semi-remorque (26), avec hayon élévateur de chargement/déchargement (3) qui est disposé à l'extrémité arrière (2) du véhicule et qui est actionnable par une unité de commande (4),
**caractérisé en ce que**
- sur l'extrémité arrière du véhicule (2) est disposée une caméra de rétrovision (8), qui envoie une image d'un espace de surveillance (9) se trouvant derrière l'extrémité arrière (2), à un écran (11) qui est disposé sur une cabine de conducteur (7) du véhicule,
- il est positionné dans ou sur l'écran (11) au moins un marquage (12,17) de sorte que le véhicule utilitaire (1) présente à l'approche d'un des postes de chargement/déchargement (13) associés au marquage (12,17) une position de chargement/déchargement prédéfinie lorsque sur l'écran (11) un chevauchement est atteint entre le marquage (12, 17) et un bord ou angle (15, 19) prédéfini tourné vers le hayon élévateur de chargement/déchargement (3), du poste de chargement/déchargement (13), **caractérisé en ce que**
- l'unité de commande (4) du hayon élévateur de chargement/déchargement (3) est disposée dans la cabine de conducteur (7),
- l'unité de commande (4) présente un premier interrupteur (28) qui provoque lors de son actionnement un basculement d'ouverture du hayon élévateur de chargement/déchargement (3),
- l'unité de commande (4) présente un second interrupteur (29) qui provoque lors de son actionnement un basculement de fermeture du hayon élévateur de chargement/déchargement (3)
- l'unité de commande (4) présente un troisième interrupteur (30) qui provoque un abaissement du hayon élévateur de chargement/déchargement (3) basculé en ouverture,
- l'unité de commande (4) présente un quatrième interrupteur (31) qui provoque un soulèvement du hayon élévateur de chargement/déchargement (3) basculé en ouverture,

2. Véhicule selon la revendication 1, **caractérisé en ce que** le premier interrupteur (28) et le second interrupteur (29) sont actionnables en alternance au moyen d'une première manette commune (32).

3. Véhicule selon la revendication 1 ou 2, **caractérisé en ce que** le troisième interrupteur (30) et le quatrième interrupteur (31) sont actionnables en alternance au moyen d'une seconde manette commune (33) .

4. Véhicule selon l'une des revendications 1 à 3, **caractérisé en ce que** l'unité de commande (4) est intégrée ou encastrée dans un élément d'habillage de l'espace intérieur, par exemple le tableau de bord, la console centrale ou le plafond du véhicule.

5. Véhicule selon l'une des revendications 1 à 4, **caractérisé en ce que** l'unité de commande (4) et l'écran (11) sont logés dans un boîtier commun (22).

6. Véhicule selon l'une des revendications 1 à 5, **caractérisé en ce que** deux unités de commande (4) sont prévues pour l'actionnement du hayon élévateur de chargement/déchargement (3), l'une étant disposée à l'extrémité arrière de véhicule (2) prés du hayon élévateur de chargement/déchargement (3) et l'autre dans la cabine de conducteur (7).

7. Véhicule selon l'une des revendications 1 à 6, **caractérisé en ce qu'**un marquage (12) est prévu pour un poste de chargement (13) réalisé comme une rampe de chargement/déchargement (14), le bord étant formé par un des bords supérieurs avant (15), de la rampe de chargement/déchargement (14), tourné vers le hayon élévateur de chargement/déchargement (3), la position de chargement/déchargement respective étant sélectionnée de sorte que le hayon élévateur (3) pour le chargement et le déchargement peut reposer de manière sûre sur l'une des sections d'extrémité (16) présentant le bord avant (15) de la rampe de chargement/déchargement (14).

8. Véhicule selon la revendication 7, **caractérisé en ce que** la rampe de chargement/téléchargement (14) et/ou le hayon élévateur de chargement/déchargement (3) sont dimensionnés de sorte que le hayon élévateur de chargement/déchargement (3) s'étend sensiblement horizontalement quand il repose sur la section d'extrémité (16) de la rampe de chargement/téléchargement (14).

9. Véhicule selon l'une des revendications 1 à 8, **caractérisé en ce qu'**un marquage (17) est prévu pour un poste de chargement/déchargement (13) réalisé comme surface de chargement/déchargement (18) au niveau du sol, le bord ou angle étant formé par un bord inférieur (19) d'une délimitation (21) de la surface de chargement/déchargement (18), cette délimitation étant élevée du sol (20) vers le haut et tournée vers le hayon élévateur de chargement/déchargement (3), la position respective de chargement étant sélectionnée de sorte que le hayon élévateur de chargement/déchargement (3) pour le chargement et le déchargement peut s'appliquer de manière sûre devant la délimitation (21) sur la surface de chargement/déchargement (18).

10. Véhicule selon l'une des revendications 1 à 9, **caractérisé en ce qu'**au moins un marquage (12, 17) est placé fixe ou de manière réglable sur un boîtier d'écran (22).

11. Véhicule selon l'une des revendications 1 à 10, **caractérisé en ce qu'**au moins un marquage (12,17) est intégré fixe ou réglable dans l'image représentée sur l'écran (11).

12. Véhicule selon l'une des revendications 1 à 11, **caractérisé en ce qu'**une unité de commande (23) est prévue dans laquelle il est possible de stocker pour plusieurs postes de chargement/déchargement (13) un marquage respectif (12, 17), un marquage stocké (12, 17) pouvant être appelé par saisie du poste de chargement/'déchargement (13) et être représenté sur l'écran (11).

13. Unité de commande pour l'actionnement d'un hayon élévateur de chargement/déchargement (3) d'un véhicule utilitaire (1) en particulier un poids lourd avec ou sans remorque (27) ou semi-remorque (26), pour le véhicule utilitaire (1) le hayon élévateur de chargement/déchargement (3) actionnable avec l'unité de commande (4) étant disposé à une extrémité arrière (2) du véhicule où est disposée une caméra de rétrovision (8) qui envoie une image d'un espace de surveillance (9) se trouvant derrière l'extrémité arrière de véhicule (2) à un écran (11) disposé dans une cabine de conducteur (7) du véhicule (1), écran dans ou sur lequel au moins un marquage (12, 17) est positionné de sorte que le véhicule utilitaire (1) présente à l'approche d'un poste de chargement/déchargement (13) associé au marquage (12, 17) une position de chargement/déchargement prédéfinie, lorsque sur l'écran (11), un chevauchement est atteint entre le marquage (12, 17) et un bord ou angle (15, 19) prédéfini tourné vers le hayon élévateur de chargement/déchargement (3), du poste de chargement (13),
**caractérisé en ce que**
- l'unité de commande (4) est conçue pur un montage dans la cabine de conducteur (3) (7) du véhicule utilitaire (1),
- l'unité de commande (4) présente un premier interrupteur (28) qui provoque lors de son actionnement un basculement d'ouverture du hayon élévateur de chargement/déchargement (3),
- l'unité de commande (4) présente un second interrupteur (29) qui provoque lors de son actionnement un basculement de fermeture du hayon élévateur de chargement/déchargement (3)
- l'unité de commande (4) présente un troisième interrupteur (30) qui provoque un abaissement du hayon élévateur de chargement/déchargement (3) basculé en ouverture,
- l'unité de commande (4) présente un quatrième interrupteur (31) qui provoque un soulèvement du hayon élévateur de chargement/déchargement (3) basculé en ouverture,

14. Unité de commande selon la revendication 13 **caractérisée par** les caractéristiques caractérisantes d'au moins une des revendications 2 à 5.
